# EUROPÄISCHE PATENTSCHRIFT

(11) **EP 2 625 958 B1**
(45) Veröffentlichungstag und Bekanntmachung des Hinweises auf die Patenterteilung: **25.10.2017**
(21) Anmeldenummer: 12196645.1
(22) Anmeldetag: 12.12.2012
(51) Int. Cl.: A21C 11/00, A21C 9/08

(54) **Verfahren und Vorrichtung zum Bearbeiten von gebogenen Croissant-Teiglingen**
Method and device for processing curved croissant pastries
Procédé et dispositif de traitement de portions de pâtes en forme de croissant

(30) Priorität: 09.02.2012 DE 102012201933
(43) Veröffentlichungstag der Anmeldung: 14.08.2013
(73) Patentinhaber: Fritsch GmbH, 97348 Markt Einersheim (DE)
(72) Erfinder: Ströbel, Alfred, 97199 Ochsenfurt (DE); Endrich, Martin, 97318 Kitzingen (DE)
(74) Vertreter: advotec.

(56) Entgegenhaltungen:
- EP-A1- 0 540 014
- EP-A1- 0 906 725
- EP-A2- 0 962 142
- DE-A1- 4 039 793
- DE-A1-102010 027 622
- DE-T2- 69 512 163

## Beschreibung

Die Erfindung betrifft eine Vorrichtung zum Bearbeiten von gebogenen Croissant-Teiglingen nach dem Oberbegriff des Anspruchs 1. Weiter betrifft die Erfindung ein Verfahren zum Einsatz einer solchen Vorrichtung gemäß der Oberbegriff des Anspruchs 12. Eine gattungsgemäße Vorrichtung zum Bearbeiten von ringförmig gebogenen Croissant-Teiglingen ist beispielsweise aus der DE 40 05 934 A1 bekannt. Bei dieser Vorrichtung werden die ringförmig gebogenen Croissant-Teiglinge durch sukzessives Verbiegen von geradlinigen Teigrohlingen geformt, wobei die ringförmige Gestalt der Croissant-Teiglinge vor und während des Backens durch ein Zurückspreizen des ringförmig gebogenen Teigs gefährdet ist. Um die ringförmige Gestalt der Croissant-Teiglinge zu sichern ist deshalb eine Wirkeinheit, nämlich eine Zange, vorgesehen. Zwischen den Greifflächen dieser Zange werden die Spitzen der Croissant-Teiglinge aneinandergedrückt, so dass sich der Teig an den Spitzen des Croissant-Teiglings miteinander verbindet. Durch diese Verbindung des Teigs an den Spitzen des Croissant-Teiglings wird ein unerwünschtes Aufspreizen des Croissant-Teiglings vor und während des Backens verhindert.

Nachteilig an dieser Wirkeinheit, mit der die Spitzen der Croissant-Teiglinge miteinander verbunden werden, ist, dass die dünne Haut des Teigs durch den beim Eingriff der Wirkeinheit aufgebrachten Druck aufgerissen und dadurch die an sich erwünschte einheitliche Hautstruktur im Bereich der Spitzen des Croissants zerstört wird. Eine Vorrichtung und ein Verfahren gemäß der Oberbegriff der Ansprüche 1 und 12 ist aus DE 10 2010 027 622 A1 bekannt. In dieser Offenlegungsschrift wird eine Vorrichtung zum Formen von gebogenen Croissant-Teiglingen und zum Zusammendrücken der Spitzen der Croissant-Teiglinge offenbart, welche eine Unterlage, einen Greiferträger, am Greiferträger angebrachte Haltebacken, um eine Schwenkachse schwenkbar im Greiferträger gelagerte Schwenkträger, am Schwenkträger angebrachte Formbacken, einen Antrieb und eine elastisch verformbare Wirkeinheit umfasst, mittels welcher die Spitzen der Croissants verbunden werden. Zudem offenbart diese Offenlegungsschrift ein Verfahren zum Bearbeiten von gebogenen Croissant-Teiglingen mittels einer elastisch verformbaren Wirkeinheit. Ausgehend von diesem Stand der Technik ist es deshalb Aufgabe der vorliegenden Erfindung, eine neue Vorrichtung mit einer Wirkeinheit zum Verbinden der Spitzen der gebogenen, insbesondere ringförmigen, Croissant-Teiglinge vorzuschlagen, bei der das Aufreißen der Teighaut vermieden oder weitgehend verringert wird. Weiter wird ein Verfahren zum Einsatz einer solchen Vorrichtung vorgeschlagen.

Diese Aufgabe wird durch eine Vorrichtung und ein Verfahren nach der Lehre der unabhängigen Hauptansprüche gelöst.

Vorteilhafte Ausführungsformen der Erfindung sind Gegenstand der Unteransprüche.

Grundgedanke der erfindungsgemäßen Vorrichtung ist es, dass die Wirkeinheit, die beim Zusammendrücken des Teigs im Bereich der Spitzen an der Teighaut zur Anlage kommt, elastisch verformbar ist. Durch diese Elastizität der Wirkeinheit ergibt es sich, dass sich die Wirkeinheit beim Zusammendrücken der Spitzen des Croissant-Teiglings zumindest geringfügig verformen kann. Durch diese Verformung der Wirkeinheit wird erreicht, dass der Druck von der Wirkeinheit weitgehend gleichmäßig auf den Teig der Croissant-Teiglinge übertragen wird und Druckspitzen vermieden werden. Durch die Vermeidung dieser Druckspitzen in der Wirkzone zwischen Wirkeinheit und dem Teig des Croissant-Teiglings wird ein Aufreißen der Teighaut vermieden oder weitgehend verringert. Erfindungsgemäß weist die Wirkeinheit einen Härtegrad im Bereich von 0 Shore-A bis 20 Shore-A auf. Das erfindungsgemäße Prinzip kann bei halbgebogenen, dreiviertel-gebogenen oder ringförmig-gebogenen Croissant-Teiglingen eingesetzt werden.

Gemäß einer bevorzugten Ausführungsform der Erfindung ist es vorgesehen, dass sich die Wirkfläche der Wirkeinheit beim Zusammendrücken der Spitzen des Croissant-Teiglings großflächig an die Teigoberfläche anlegen kann. Durch diesen großflächigen Kontakt zwischen der Wirkeinheit einerseits und dem Teig des Croissant-Teiglings andererseits wird eine sehr gleichmäßige Druckverteilung in der Wirkzone erreicht und damit die Gefahr des Aufreißens der Teighaut nochmals verkleinert. Welche konstruktive Bauart die Wirkeinheit zur Aufbringung des Drucks zwischen den Spitzen des Croissant-Teiglings aufweist, ist grundsätzlich beliebig. Besonders bevorzugt ist es, wenn die Wirkeinheit in der Art eines Druckstempels ausgebildet ist. Ein solcher Druckstempel weist als Wirkfläche eine Stempelfläche auf, die durch Antrieb des Druckstempels am Teig des Croissant-Teiglings verformend zum Eingriff gebracht wird.

Um die Verletzung der Teighaut des Croissant-Teiglings beim Zusammendrücken der Spitzen noch weiter zu verringern, ist es besonders vorteilhaft, wenn die Wirkfläche der elastischen Wirkeinheit, insbesondere die Stempelfläche der Stempeleinheit, eine glatte Oberfläche aufweist. Durch die glatte Oberfläche der Wirkeinheit wird ein Anhaften des Teigs an der Wirkfläche weitgehend vermieden, so dass sich insbesondere beim Ablösen der Wirkeinheit von der Teigoberfläche keine Verletzungen ergeben.

Eine weitere Verbesserung zur Vermeidung der Verletzung der Teighaut kann dadurch erreicht werden, dass die Wirkfläche der elastischen Wirkeinheit, insbesondere die Stempelfläche der Stempeleinheit, eine Oberfläche mit oleophilen Benetzungseigenschaften aufweist. Da der Teig der Croissant-Teiglinge Feuchtigkeit enthält, wird durch die oleophile Eigenschaft der Wirkfläche erreicht, dass die Teighaut die Wirkfläche der Wirkeinheit nur schlecht benetzt und damit nur schwach an der Wirkfläche anhaftet. Auf diese Weise wird also gewährleistet, dass sich die Wirkfläche gut und ohne Aufreißen der Teighaut vom Teig der Croissant-Teiglinge ablöst.

Aus welchem Material die elastische Wirkeinheit hergestellt wird, ist grundsätzlich beliebig. Als besonders geeignet haben sich silikonhaltige Elastomer-Materialien erwiesen. Insbesondere ist Silikonkautschuk sehr gut geeignet für erfindungsgemäße Wirkeinheiten, insbesondere erfindungsgemäße Stempeleinheiten, zum Verformen der Spitzen der Croissant-Teiglinge zu verwenden.

Das Maß der elastischen Verformbarkeit der erfindungsgemäßen Wirkeinheit ist auf den jeweiligen Anwendungsfall abzustimmen. Erfindungsgemäß hat sich ein Härtegrad der elastischen Wirkeinheit im Bereich von 0 Shore-A bis 20 Shore-A erwiesen.

Im Hinblick auf den Schutz der Teighaut ist es weiterhin besonders vorteilhaft, wenn die Wirkfläche der Wirkeinheit konvex gekrümmt ist, insbesondere ohne kantige Flächenübergänge aufzuweisen. Die Wirkfläche kann dazu beispielsweise kugelabschnittsförmig oder ballig ausgeformt sein. Durch die konvex gekrümmte Wirkfläche der Wirkeinheit ohne kantige Flächenübergänge werden Druckspitzen in der Wirkzone zwischen Wirkeinheit und Teighaut vermieden. Außerdem wird ein flächiges Anlegen der Wirkfläche beim Druck der Wirkeinheit auf den Teig der Croissant-Teiglinge gefördert.

Gemäß einer bevorzugten Ausführungsvariante ist es vorgesehen, dass die Wirkeinheit zum Zusammendrücken der Spitzen der Croissant-Teiglinge in eine Vorrichtung zum Biegen der gebogenen Croissant-Teiglinge aus geradlinigen Teigrohlingen integriert ist. Dadurch ist es gewährleistet, dass die gebogenen Croissant-Teiglinge unmittelbar nach dem Biegen durch die elastische Wirkeinheit an den Spitzen verbunden werden, so dass ein unerwünschtes Auseinanderspreizen der Croissant-Teiglinge nach dem Biegen ausgeschlossen ist.

Dient ein Druckstempel als Wirkeinheit, so ist es in der einfachsten Ausführungsform möglich, als Gegenfläche des Druckstempels eine Unterlage, beispielsweise ein Transportband, auf dem die Croissant-Teiglinge gefördert werden, vorzusehen. Durch Antrieb des Druckstempels kann dann der Abstand zwischen der Unterlage und dem Druckstempel verkleinert und auf diese Weise der Teig an den Spitzen des Croissant-Teiglings zusammengedrückt werden. Die Spitzen des Croissant-Teiglings sind dazu in einem vorgelagerten Bearbeitungsschritt übereinanderzulegen. Alternativ dazu kann der Druckstempel auch mit einem Gegenstempel zusammenwirken, wobei durch Antrieb des Druckstempels der Abstand zwischen Druckstempel und Gegenstempel verringert und damit die Spitzen des Croissant-Teiglings zusammengedrückt werden können.

Sollen nebeneinander angeordnete Spitzen des Croissant-Teiglings gegen eine Unterlage gedrückt werden, um die Spitzen kurzzeitig an der Unterlage zu fixieren, kann für beide Spitzen jeweils eine elastische Wirkeinheit, insbesondere jeweils eine Stempeleinheit, vorgesehen sein.

Alternativ zur Verwendung von zwei Wirkeinheiten kann die elastische Wirkeinheit so groß gewählt werden, dass die Wirkfläche durch Antrieb der Wirkeinheit gleichzeitig an beiden nebeneinander angeordneten Spitzen des Croissant-Teiglings zum Eingriff bringbar ist. Dadurch können dann beide Spitzen des Croissant-Teiglings durch Antrieb der einen Wirkeinheit gegen eine Unterlage gedrückt und kurzzeitig an der Unterlage fixiert werden.

Beim Einsatz der erfindungsgemäßen Vorrichtung ist es zwangsläufig, dass sich die elastische Wirkeinheit verformt, sobald die Wirkfläche an dem gebogenen Croissant-Teigling zum Eingriff gebracht wird, und dadurch die Spitzen des Croissant-Teiglings gegeneinander drückt. Um trotz dieser an sich erwünschten Verformung der Wirkeinheit eine gute Verbindung zwischen dem Teig der miteinander zu verbindenden Spitzen der Croissant-Teiglinge zu erreichen, bedarf es einer bestimmten Einwirkzeit, während der die Wirkeinheit mit dem Teig verformend in Eingriff steht. Gemäß des erfindungsgemäßen Verfahrens ist es deshalb vorgesehen, dass die Wirkeinheit nach Erreichen einer Endauslenkung, bei der die Spitzen des Croissant-Teiglings gegeneinander gedrückt sind, für eine bestimmte Verweildauer in dieser Endauslenkung verbleibt und nach Ende der Verweildauer außer Eingriff der Spitzen des Croissant-Teiglings gebracht wird. Durch das Verweilen der Wirkeinheit in der Endauslenkung wird erreicht, dass der Teig der miteinander zu verbindenden Spitzen der Croissant-Teiglinge ausreichend Zeit hat, sich an die Wirkfläche anzulegen.

Ist die Wirkeinheit in der Art eines Druckstempels ausgebildet, so ist es besonders vorteilhaft, wenn der Druckstempel während des Kontakts zwischen der Stempelfläche und dem Croissant-Teigling synchron zur Unterlage der Croissant-Teiglinge, insbesondere synchron zu einem Förderband, in Förderrichtung verfahren wird. Auf diese Weise wird eine Relativbewegung in Förderrichtung zwischen dem Croissant-Teigling und dem Druckstempel während der Verweildauer, während der die Spitzen des Croissant-Teiglings zusammengedrückt bleiben, vermieden.

Eine Ausführungsform der Erfindung ist in den Zeichnungen schematisch dargestellt und wird nachfolgend beispielhaft erläutert.

Es zeigen:
- Fig. 1: einen Ablauf eines Formgebungsprozesses zur Herstellung von ringförmig gebogenen Croissant-Teiglingen aus geradlinigen Teigrohlingen;
- Fig. 2: eine erste Ausführungsform einer Vorrichtung zum kombinierten Biegen von ringförmig gebogenen Croissant-Teiglingen mit integrierter Wirkeinheit zum Verbinden der Spitzen der Croissant-Teiglinge;
- Fig. 3: die Formgebung eines ringförmig gebogenen Croissant-Teiglings mit anschließendem Zusammendrücken der Spitzen des Croissant-Teiglings unter Verwendung der Vorrichtung gemäß Fig. 2 in Ansicht von oben;
- Fig. 4: die in der Art eines Druckstempels ausgebildete Wirkeinheit der Vorrichtung gemäß Fig. 2 vor dem Zusammendrücken der Spitzen eines Croissant-Teiglings in seitlicher Ansicht;
- Fig. 5: die Wirkeinheit gemäß Fig. 4 beim Zusammendrücken der Spitzen eines Croissant-Teiglings in seitlicher Ansicht;
- Fig. 6: die Wirkzone zwischen der Wirkfläche der Wirkeinheit gemäß Fig. 4 und den Spitzen eines Croissant-Teiglings beim zunehmenden Zusammendrücken des Teigmaterials;
- Fig. 7: einen Ablauf eines Formgebungsprozesses zur Herstellung von offen gebogenen Croissant-Teiglingen aus geradlinigen Teigrohlingen unter Verwendung von zwei Druckstempeln;
- Fig. 8: einen Ablauf eines Formgebungsprozesses zur Herstellung von offen gebogenen Croissant-Teiglingen aus geradlinigen Teigrohlingen unter Verwendung eines großen Druckstempels.

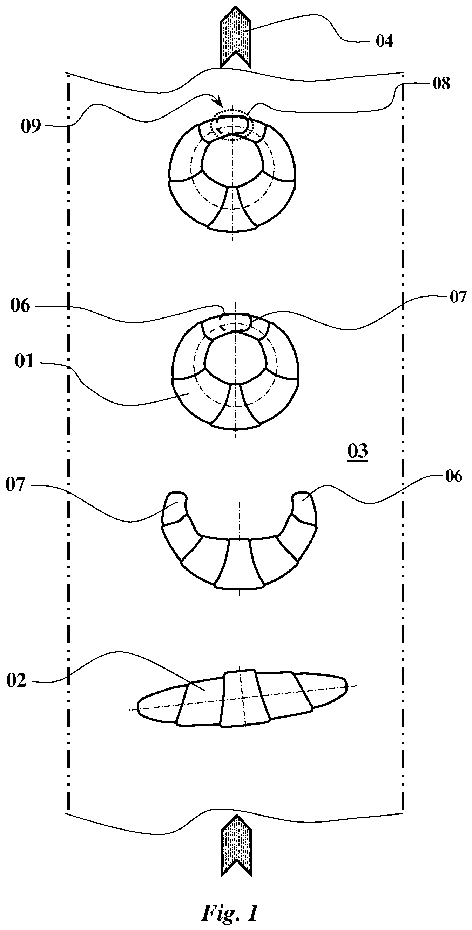

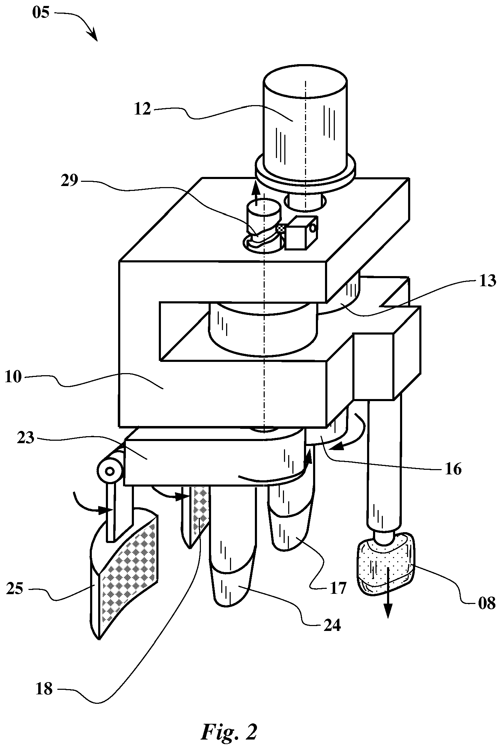

Fig. 1 zeigt beispielhaft die Formgebung eines ringförmig gebogenen Croissant-Teiglings 01 ausgehend von einem geradlinig gewickelten Teigrohling 02. Hierbei wird der Teigrohling auf einem Transportband 03 in Förderrichtung 04 bewegt. Durch Einsatz der in Fig. 2 dargestellten Vorrichtung 05 wird der geradlinige Teigrohling 02 zunächst ringförmig gebogen, so dass die Spitzen 06 und 07 an den Enden des Teigrohlings 02 übereinanderliegen. Sobald die Spitzen 06 und 07 des ringförmig gebogenen Croissant-Teiglings 01 übereinanderliegen, wird eine in der Art eines Druckstempels ausgebildete Wirkeinheit 08 (siehe Fig. 2) der Vorrichtung 05 von oben am Teig des Croissant-Teiglings 01 zum Eingriff gebracht, um die Spitzen 06 und 07 in einer Wirkzone 09 zusammenzudrücken. Durch das Zusammendrücken der Spitzen 06 und 07 wird der Teig des Croissant-Teiglings 01 an den sich gegenüberliegenden Enden miteinander verprägt und dadurch zumindest bereichsweise stoffschlüssig verbunden. Ein nachträgliches Aufspreizen des Croissant-Teiglings 01, durch das die ringförmige Gestalt wiederum verloren ginge, wird durch dieses Verprägen des Teigs im Bereich der Spitzen 06 und 07 ausgeschlossen. Während die Wirkeinheit 08 die Spitzen 06 und 07 des Croissant-Teiglings 01 zusammendrückt, wird die Wirkeinheit 08 synchron zur Förderbewegung des Transportbands 03 in Förderrichtung 04 bewegt, so dass während des Kontakts zwischen der Wirkeinheit 08 und dem Croissant-Teigling 01 eine Relativbewegung ausgeschlossen ist. Die Förderbewegung des Transportbands 03 wird während des Zusammendrückens der Spitzen 06 und 07 des Croissant-Teiglings 01 nicht unterbrochen, sondern die Wirkeinheit 08 synchron zum Transportband 03 in Förderrichtung 04 bewegt.

Fig. 2 zeigt eine Vorrichtung 05 zum kombinierten Biegen der ringförmig gebogenen Croissant-Teiglinge und nachträglichem Zusammendrücken der Spitzen 06 und 07. An der Vorrichtung 05 ist dabei ein Greiferträger 10 vorgesehen. Unterhalb des Greiferträgers 10 sind zwei Schwenkträger 16 und 23 angeordnet. Diese Schwenkträger 16 und 23 sind mittels einer Welle im Greiferträger 10 schwenkbar gelagert. Die Kopplung der beiden Schwenkträger 16 und 23 erfolgt über ein Schwenkgetriebe 13. Hierdurch wird gewährleistet, dass die beiden Schwenkträger 16 und 23 eine synchronisierte, gegenläufige Schwenkbewegung vollziehen. Der Antrieb der Schwenkträger 16 und 23 erfolgt mittels eines Schwenkantriebs 12, welcher beispielsweise oberhalb einer Welle des Schwenkträgers 16 angeordnet und am Greiferträger 10 befestigt sein kann. Mit den Schwenkträgern 16 und 23 fest verbunden sind jeweils Haltebacken 17 und 24. Relativ beweglich zu den Schwenkträgern 16 und 23 sind dagegen die Formbacken 18 und 25. Im dargestellten Beispiel vollziehen die Formbacken 18 und 25 eine lineare Anlagebewegung in Richtung der Haltebacken 17 und 24. Durch diese den Abstand verringernde Anlagebewegung können die Spitzen 06 und 07 der geradlinigen Teigrohlinge 02 gegriffen werden. Durch anschließendes gegenläufiges Verschwenken der Schwenkträger 16 und 23 kann dann der zunächst geradlinige Teigrohling 02 ringförmig gebogen werden, so dass er die Gestalt des erwünschten Croissant-Teiglings 01 erhält. Um die Spitzen 06 und 07 übereinanderzulegen ist eine Hubbewegung des zweiten Schwenkträgers 23 erforderlich. Zur Realisierung dieser Hubbewegung des Schwenkträgers 23 wird eine Kulissenführung 29 vorgesehen. Beim Verschwenken des Schwenkträgers 23 wird dieser sukzessive angehoben, so dass die zwischen den Haltebacken 24 und dem Formbacken 25 eingespannte Teigspitze leicht angehoben und auf die gegenüberliegende Teigspitze abgelegt wird.

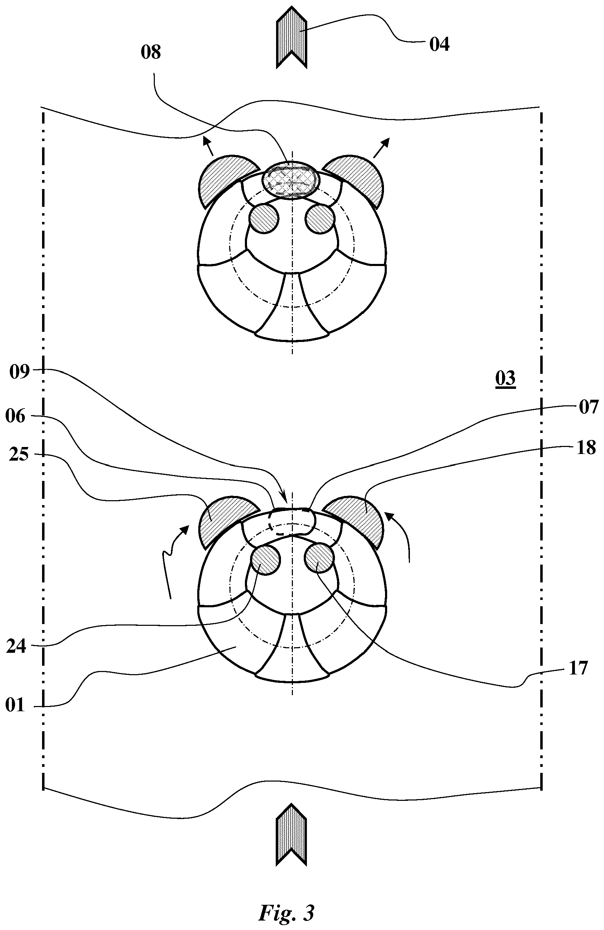

Fig. 3 stellt das Biegen des Croissant-Teiglings mittels der Vorrichtung 05 in Ansicht von oben dar. Nachdem der Croissant-Teigling 01 vollständig ringförmig gebogen ist und die Spitzen 06 und 07 übereinanderliegen, wird die Wirkeinheit 08, die sich nach dem Biegen des Croissant-Teiglings 01 oberhalb der Spitzen 06 und 07 befindet, nach unten ausgefahren und so die Spitzen 06 und 07 zwischen dem Transportband 03 und der Wirkeinheit 08 zusammengedrückt.

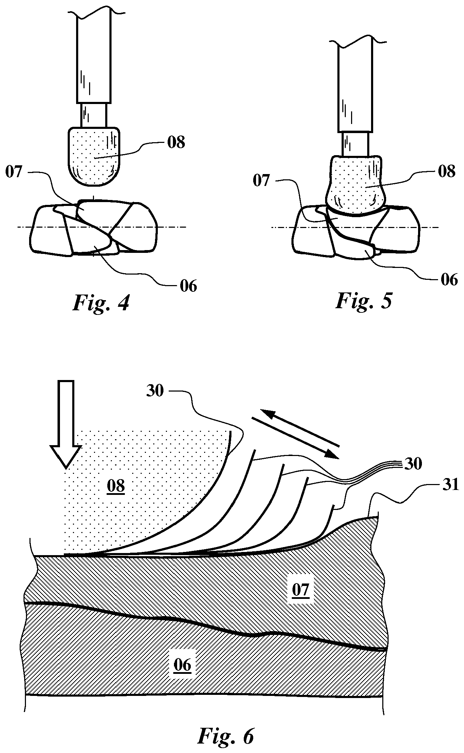

Fig. 4 und Fig. 5 stellen das Zusammendrücken der Spitzen 06 und 07 mittels der Wirkeinheit 08 dar. Wie in Fig. 5 dargestellt, ist die Wirkeinheit 08 elastisch verformbar und legt sich mit ihrer Wirkfläche 30 an den Teig des Croissant-Teiglings 01 an.

In Fig. 6 ist vergrößert dargestellt, wie sich die Wirkfläche 30 des Wirkelements 08 beim Zusammendrücken der Spitzen 06 und 07 des Croissant-Teiglings 01 mit zunehmendem Druck auf einer immer größer werdenden Fläche an die Haut 31 des Croissant-Teiglings 01 anlegt ohne diese aufzureißen.

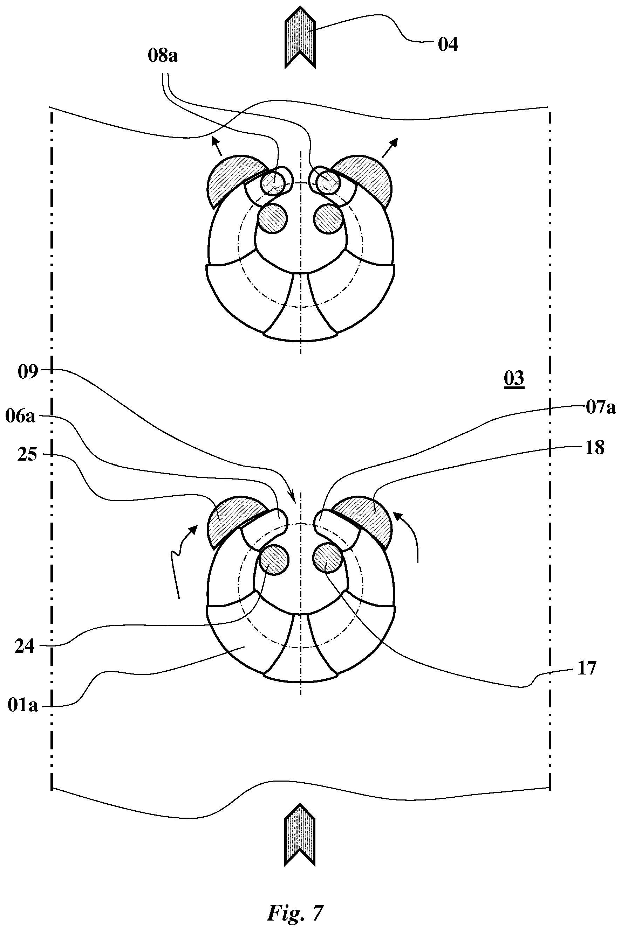

Fig. 7 zeigt einen Ablauf eines Formgebungsprozesses zur Herstellung von offen gebogenen Croissant-Teiglingen 01a aus geradlinigen Teigrohlingen, der im Prinzip dem in Fig. 1 dargestellten Formgebungsprozess entspricht. Da die Croissant-Teiglinge 01a nach der Verformung aber keine geschlossene Ringform aufweisen, sondern eine offene Bogenform entstehen soll, kann die Fixierung der vorgegebenen Bogenform nicht durch Fixierung der beiden Spitzen 06a und 07a der Croissant-Teiglinge 01a aneinander erfolgen. Stattdessen werden deshalb die beiden Spitzen 06a und 07a der Croissant-Teiglinge 01a unter Verwendung von zwei Druckstempeln gegen das als Unterlage dienende Transportband 03 gedrückt. Durch das leichte Andrücken der Spitzen 06a und 07a auf die Oberfläche des Transportbands 03 wird der Teig der Croissant-Teiglinge 01a im Bereich der Spitzen 06a und 07a durch Haftkräfte fixiert und dadurch die gewünschte Bogenform der Croissant-Teiglinge 01a gesichert. Nach Abbau der durch die Verformung im Teig hervorgerufenen Spannungen können dann die Croissant-Teiglinge 01a problemlos vom Transportband 03 abgenommen werden, ohne dass die Gefahr des Zurückspreizens der Croissant-Teiglinge 01a besteht. Die Förderbewegung des Transportbands 03 wird wiederum während des Andrückens der Spitzen 06a und 07a des Croissant-Teiglings 01a nicht unterbrochen, sondern die Wirkeinheit 08 synchron zum Transportband 03 in Förderrichtung 04 bewegt.

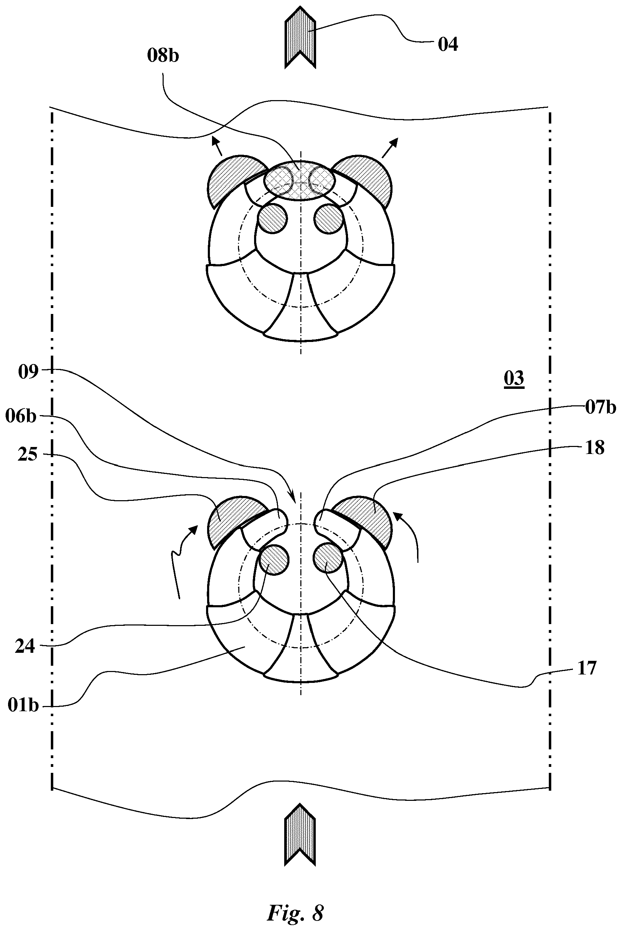

Fig. 8 zeigt einen Ablauf eines Formgebungsprozesses zur Herstellung von offen gebogenen Croissant-Teiglingen aus geradlinigen Teigrohlingen, der im Prinzip dem in Fig. 7 dargestellten Formgebungsprozess entspricht. Allerdings werden die Spitzen 06b und 07b der offen gebogenen Croissant-Teiglinge 01a unter Verwendung eines einzigen Druckstempels 08b gegen das Transportband 03 angedrückt. Die Wirkfläche des Druckstempels 08b ist dabei so groß gewählt, dass beide nebeneinander liegenden Spitzen 06b und 07b vom Druckstempel 08b überdeckt werden und in einem einzigen Hub gemeinsam gegen das Transportband 03 angedrückt werden können.

## Patentansprüche

1. Vorrichtung (05) zum kombinierten Biegen von gebogenen Croissant-Teiglingen (01, 01a, 01b) aus geradlinig gewickelten Teigrohlingen (02) und zum Zusammendrücken der Spitzen (06, 06a, 06b, 07, 07a, 07b) der Croissant-Teiglinge (01, 01a, 01b) umfassend
- eine Unterlage (03), und
- einen Greiferträger (10), und
- zwei jeweils um eine Schwenkachse schwenkbar im Greiferträger (10) gelagerte Schwenkträger (16, 23), welche eine gegenläufige Schwenkbewegung durchführen, und
- mit dem Schwenkträger (16, 23) fest verbundene Haltebacken (17, 24), welche an einer ersten Seite am Croissant-Teigling (01, 01a, 01b) zur Anlage bringbar sind, und
- am Schwenkträger (16, 23) angebrachte Formbacken (18, 25), welche auf der gegenüberliegenden zweiten Seite am Teigling (01, 01a, 01b) zur Anlage bringbar sind, und
- einen Antrieb, und
- zumindest eine elastisch verformbare Wirkeinheit (08, 08a, 08b), deren Wirkfläche (30) durch Antrieb der Wirkeinheit (08, 08a, 08b) an dem gebogenen Croissant-Teigling (01, 01a, 01b) zum Eingriff bringbar ist, wobei durch Antrieb der Wirkeinheit (08, 08a, 08b) die Spitzen (06, 06a, 06b, 07, 07a, 07b) des Croissant-Teiglings (01, 01a, 01b) gegen die Unterlage (03) drückbar oder gegeneinander drückbar und zumindest geringfügig miteinander verbindbar sind, und wobei die Wirkfläche (30) der Wirkeinheit (08, 08a, 08b) in der Wirkzone (09) durch elastische Verformung der Wirkeinheit (08, 08a, 08b) an die Teighaut (31) anlegbar ist,
**dadurch gekennzeichnet,**
**dass** die Wirkeinheit (08, 08a, 08b) einen Härtegrad im Bereich von 0 Shore-A bis 20 Shore-A aufweist.

2. Vorrichtung nach Anspruch 1,
**dadurch gekennzeichnet,**
**dass** die Wirkfläche (30) der Wirkeinheit (08, 08a, 08b) beim Verformen der Spitzen (06, 06a, 06b, 07, 07a, 07b) des Croissant-Teiglings (01, 01a, 01b) großflächig an die Teighaut (31) anlegbar ist.

3. Vorrichtung nach Anspruch 1 oder 2,
**dadurch gekennzeichnet,**
**dass** die Wirkeinheit (08, 08a, 08b) in der Art eines Druckstempels ausgebildet ist.

4. Vorrichtung nach einem der Ansprüche 1 bis 3,
**dadurch gekennzeichnet,**
**dass** die Wirkfläche (30) der elastischen Wirkeinheit (08, 08a, 08b), insbesondere die Stempelfläche der Stempeleinheit, eine glatte Oberfläche aufweist.

5. Vorrichtung nach einem der Ansprüche 1 bis 4,
**dadurch gekennzeichnet,**
**dass** die Wirkfläche (30) der elastischen Wirkeinheit (08, 08a, 08b), insbesondere die Stempelfläche der Stempeleinheit, eine Oberfläche mit oleophilen Benetzungseigenschaften aufweist.

6. Vorrichtung nach einem der Ansprüche 1 bis 5,
**dadurch gekennzeichnet,**
**dass** die elastische Wirkeinheit (08, 08a, 08b), insbesondere die Stempeleinheit, aus einem silikonhaltigen Elastomer-Material, insbesondere aus Silikonkautschuk, hergestellt ist.

7. Vorrichtung nach einem der Ansprüche 1 bis 6,
**dadurch gekennzeichnet,**
**dass** die elastische Wirkeinheit (08, 08a, 08b), insbesondere die Stempeleinheit, eine konvex gekrümmte Wirkfläche (30) aufweist.

8. Vorrichtung nach einem der Ansprüche 1 bis 7,
**dadurch gekennzeichnet,**
**dass** die elastische Wirkeinheit (08, 08a, 08b), insbesondere die Stempeleinheit, Bestandteil einer Vorrichtung (05) zum Biegen der ringförmigen Croissant-Teiglinge (01, 01a, 01b) aus geradlinigen Teigrohlingen (02) ist.

9. Vorrichtung nach einem der Ansprüche 1 bis 8,
**dadurch gekennzeichnet,**
**dass** durch Antrieb der Wirkeinheit (08) die übereinanderliegenden Spitzen (06, 07) des Croissant-Teiglings (01) zwischen der Unterlage (03) und der Wirkfläche (30) der Wirkeinheit (08) zusammendrückbar sind.

10. Vorrichtung nach einem der Ansprüche 1 bis 8,
**dadurch gekennzeichnet,**
**dass** für beide nebeneinander angeordneten Spitzen (06a, 07a) des Croissant-Teiglings jeweils eine elastische Wirkeinheit (08a), insbesondere jeweils eine Stempeleinheit, vorgesehen ist.

11. Vorrichtung nach einem der Ansprüche 1 bis 8,
**dadurch gekennzeichnet,**
**dass** die elastische Wirkeinheit (08b) so groß gewählt ist, dass die Wirkfläche (30) durch Antrieb der Wirkeinheit (08b) gleichzeitig an beiden nebeneinander angeordneten Spitzen (06b, 07b) des Croissant-Teiglings (01b) zum Eingriff bringbar ist und die Spitzen (06b, 07b) des Croissant-Teiglings (01b) gegen die Unterlage (03) drückbar sind.

12. Verfahren zum Bearbeiten von gebogenen Croissant-Teiglingen (01, 01a, 01b),
- wobei zumindest eine elastisch verformbare Wirkeinheit (08, 08a, 08b) mit einer Wirkfläche (30) an dem ringförmigen Croissant-Teigling (01, 01a, 01b) verformend zum Eingriff gebracht wird, wobei dadurch die Spitzen (06, 06a, 06b, 07, 07a, 07b) des Croissant-Teiglings (01, 01a, 01b) gegen eine Unterlage (03) gedrückt oder gegeneinander gedrückt und zumindest geringfügig miteinander verbunden werden, und
- wobei die Wirkeinheit (08, 08a, 08b) nach Erreichen einer Endauslenkung, bei der die Spitzen (06, 06a, 06b, 07, 07a, 07b) des Croissant-Teiglings (01, 01a, 01b) gegen die Unterlage (03) gedrückt oder gegeneinander gedrückt sind, für eine bestimmte Verweildauer in dieser Endauslenkung verbleibt und nach Ende der Verweildauer außer Eingriff der Spitzen (06, 06a, 06b, 07, 07a, 07b) des Croissant-Teiglings (01, 01a, 01b) gebracht wird,
**dadurch gekennzeichnet,**
**dass** die Wirkeinheit (08, 08a, 08b) einen Härtegrad im Bereich von 0 Shore-A bis 20 Shore-A aufweist.

13. Verfahren nach Anspruch 12,
**dadurch gekennzeichnet,**
**dass** die Wirkeinheit (08, 08a, 08b) in der Art eines Druckstempels ausgebildet ist und durch Antrieb des Druckstempels die Spitzen (06, 06a, 06b, 07, 07a, 07b) des Croissant-Teiglings (01, 01a, 01b) zwischen einer Unterlage (03) und der Stempelfläche des Druckstempels zusammengedrückt werden, wobei der Druckstempel während des Kontakts zwischen der Stempelfläche und dem Croissant-Teigling (01, 01a, 01b) synchron zur Unterlage (03), insbesondere synchron zu einem Förderband, in Förderrichtung (04) verfahren wird.

## Claims

1. A device (05) for the combined bending of curved croissant dough pieces (01, 01a, 01b) from rectilinearly rolled unprocessed dough pieces (02) and for pressing together the tips (06, 06a, 06b, 07, 07a, 07b) of the croissant dough pieces (01, 01a, 01b), comprising:
- a base (03), and
- a gripper carrier (10), and
- two pivot carriers (16, 23) which are each pivotally mounted around a pivot axis in the gripper carrier (10) and which carry out opposite pivot motions, and
- retaining jaws (17, 24) which are firmly connected to the pivot carrier (16, 23) and which can be brought into abutment against a first side of the croissant dough piece (01, 01a 01b), and
- shaping jaws (18, 25) which are arranged on the pivot carrier (16, 23) and which can be brought into abutment against the oppositely arranged second side of the dough piece (01, 01a, 01b), and
- a drive, and
- at least one elastically deformable active unit (08, 08a, 08b) whose active surface (30) can be brought into engagement at the curved croissant dough piece (01, 01a, 01b) by driving the active unit (08, 08a, 08b), the tips (06, 06a, 06b, 07, 07a, 07b) of the croissant dough piece (01, 01a, 01b) being able to be pressed against the base (03) or against each other by driving the active unit (08, 08a, 08b) and being able to be at least slightly connected to each other, and said active surface (30) of the active unit (08, 08a, 08b) in the active zone (09) being able to be brought into abutment against the dough skin (31) via an elastic deformation of the active unit (08, 08a, 08b),
**characterized in that**
the active unit (08, 08a, 08b) has a degree of hardness ranging from 0 Shore A to 20 Shore A.

2. The device according to claim 1,
**characterized in that**
the active surface (30) of the active unit (08, 08a, 08b) can be brought into abutment against the dough skin (31) to a large extent when deforming the tips (06, 06a, 06b, 07, 07a, 07b) of the croissant dough piece (01, 01, 01b).

3. The device according to claim 1 or 2,
**characterized in that**
the active unit (08, 08a, 08b) is realized in the type of a press plunger.

4. The device according to any one of the claims 1 to 3,
**characterized in that**
the active surface (30) of the elastic active unit (08, 08a, 08b), in particular the plunger surface of the plunger unit, has a smooth surface.

5. The device according to any one of the claims 1 to 4,
**characterized in that**
the active surface (30) of the elastic active unit (08, 08a, 08b), in particular the plunger surface of the plunger unit, has a surface having oleophilic wetting properties.

6. The device according to any one of the claims 1 to 5,
**characterized in that**
the elastic active area (08, 08a, 08b), in particular the plunger unit, is made of an elastomer material containing silicone, in particular silicone rubber.

7. The device according to any one of the claims 1 to 6,
**characterized in that**
the elastic active unit (08, 08a, 08b), in particular the plunger unit, has a convexly curved active surface (30).

8. The device according to any one of the claims 1 to 7,
**characterized in that**
the elastic active unit (08, 08a, 08b), in particular the plunger unit, is part of a device (05) for bending the annular croissant dough pieces (01, 01a, 01b) out of rectilinear unprocessed dough pieces (02).

9. The device according to any one of the claims 1 to 8,
**characterized in that**
the overlapping tips (06, 07) of the croissant dough piece (01) can be pressed together between the base (03) and the active surface (30) of the active unit (08) by driving the active unit (08).

10. The device according to any one of the claims 1 to 8,
**characterized in that**
an elastic active unit (08a), in particular a plunger unit, is provided for each of the two adjacent tips (06a, 07a) of the croissant dough piece.

11. The device according to any one of the claims 1 to 8,
**characterized in that**
the elastic active unit (08b) is chosen so large that the active surface (30) can be brought into engagement at both adjacent tips (06b, 07b) of the croissant dough piece (01b) simultaneously by driving the active unit (08b), and the tips (06b, 07b) of the croissant dough piece (01b) can be pressed against the base (03).

12. A method for processing curved croissant dough pieces (01, 01a, 01b),
- wherein at least one elastically deformable active unit (08, 08a, 08b) having an active surface (30) is brought into engagement at the annular croissant dough piece (01, 01a, 01b) causing a deformation, the tips (06, 06a, 06b, 07, 07a, 07b) of the croissant dough piece (01, 01a, 01b) thus being pressed against a base (03) or against each other and being at least slightly connected to each other, and
- wherein said active unit (08, 08a, 08b) remains in an end deflection, in which the tips (06, 06a, 06b, 07, 07a, 07b) of the croissant dough piece (01, 01a, 01b) are pressed against the base (03) or against each other, for a certain period of time after reaching this end deflection and is disengaged from the tips (06, 06a, 06b, 07, 07a, 07b) of the croissant dough piece (01, 01, 01b) after the termination of the period of time,
**characterized in that**
the active unit (08, 08a, 08b) has a degree of hardness ranging from 0 Shore A to 20 Shore A.

13. The method according to claim 12,
**characterized in that**
the active unit (08, 08a, 08b) is realized in the type of a press plunger, and the tips (06, 06a, 06b, 07, 07a, 07b) of the croissant dough piece (01, 01a, 01b) are pressed together between a base (03) and the plunger surface of the press plunger by driving the press plunger, said press plunger being displaced in a conveying direction (04) in sync with the base (03), in particular in sync with a conveyor belt, while the plunger surface and the croissant dough piece (01, 01a, 01b) are in contact.

## Revendications

1. Dispositif (05) pour courber, de manière combinée, des pâtons (01, 01a, 01b) de croissant courbés à partir de pièces (02) de pâte non traitées enroulées de manière rectiligne et pour comprimer les pointes (06, 06a, 06b, 07, 07a, 07b) des pâtons (01, 01a, 01b) de croissant, comprenant
- une base (03), et
- un support (10) de préhension, et
- deux supports (16, 23) pivotants dont chacun est monté de manière pivotante autour d'un axe de pivotement dans le support (10) de préhension et qui effectuent des mouvements pivotants en sens contraire, et
- des mâchoires (17, 24) de retenue qui sont reliées solidement au support (16, 23) pivotant et qui peuvent être mises en contact avec le pâton (01, 01a, 01b) de croissant sur un premier côté, et
- des mâchoires (18, 25) de façonnage qui sont disposées au support (16, 23) pivotant et qui peuvent être mises en contact avec le pâton (01, 01a, 01b) sur le deuxième côté opposé, et
- un entraînement, et
- au moins une unité (08, 08a, 08b) active élastiquement déformable, dont la surface (30) active peut être mise en prise avec le pâton (01, 01a, 01b) de croissant courbé en entraînant l'unité (08, 08a, 08b) active, les pointes (06, 06a, 06b, 07, 07a, 07b) du pâton (01, 01a, 01b) de croissant pouvant être pressées contre la base (03) ou l'une contre l'autre et pouvant être reliées l'une à l'autre au moins légèrement, et ladite surface (30) active de l'unité (08, 08a, 08b) active dans la zone (09) active pouvant être mise en contact avec la peau (31) de pâte par une déformation élastique de l'unité (08, 08a, 08b) active,
**caractérisé en ce que**
l'unité (08, 08a, 08b) active a un degré de dureté allant de 0 Shore A à 20 Shore A.

2. Dispositif selon la revendication 1,
**caractérisé en ce qu'**
une grande partie de la surface (30) active de l'unité (08, 08a, 08b) active peut être mise en contact avec la peau (31) de pâte quand les pointes (06, 06a, 06b, 07, 07a, 07b) du pâton (01, 01a, 01b) de croissant sont déformées.

3. Dispositif selon la revendication 1 ou 2,
**caractérisé en ce que**
l'unité (08, 08a, 08b) active est réalisée en tant que piston de pression.

4. Dispositif selon l'une quelconque des revendications 1 à 3,
**caractérisé en ce que**
la surface (30) active de l'unité (08, 08a, 08b) active élastique, notamment la surface de piston de l'unité de piston, comprend une surface lisse.

5. Dispositif selon l'une quelconque des revendications 1 à 4,
**caractérisé en ce que**
la surface (30) active de l'unité (08, 08a, 08b) active élastique, notamment la surface de piston de l'unité de piston, comprend une surface ayant des propriétés mouillantes oléophiles.

6. Dispositif selon l'une quelconque des revendications 1 à 5,
**caractérisé en ce que**
l'unité (08, 08a, 08b) active élastique, notamment l'unité de piston, est faite d'une matière élastomère siliconée, notamment de caoutchouc de silicone.

7. Dispositif selon l'une quelconque des revendications 1 à 6,
**caractérisé en ce que**
l'unité (08, 08a, 08b) active élastique, notamment l'unité de piston, comprend une surface (30) active à courbure convexe.

8. Dispositif selon l'une quelconque des revendications 1 à 7,
**caractérisé en ce que**
l'unité (08, 08a, 08b) active élastique, notamment l'unité de piston, fait partie d'un dispositif (05) pour courber les pâtons (01, 01a, 01b) de croissant annulaires à partir de pièces (02) de pâte rectilignes non traitées.

9. Dispositif selon l'une quelconque des revendications 1 à 8,
**caractérisé en ce que**
les pointes (06, 07) superposées du pâton (01) de croissant peuvent être comprimées entre la base (03) et la surface (30) active de l'unité (08) active en entraînant l'unité (08) active.

10. Dispositif selon l'une quelconque des revendications 1 à 8,
**caractérisé en ce qu'**
une unité (08a) active, notamment une unité de piston, est prévue pour chacune des deux pointes (06a, 07a) adjacentes du pâton de croissant.

11. Dispositif selon l'une quelconque des revendications 1 à 8,
**caractérisé en ce que**
l'unité (08b) active élastique est choisie avec une telle taille que la surface (30) active peut être mise en prise simultanément avec les deux pointes (06b, 07b) adjacentes du pâton (01b) de croissant et les pointes (06b 07b) du pâton (01b) de croissant peuvent être pressées contre la base (03) en entraînant l'unité (08b) active.

12. Procédé pour traiter des pâtons (01, 01a, 01b) de croissant courbés, dans lequel
- au moins une unité (08, 08a, 08b) active élastiquement déformable ayant une surface (30) active peut être mise en prise avec le pâton (01, 01a, 01b) de croissant annulaire en provoquant une déformation, ce faisant les pointes (06, 06a, 06b, 07, 07a, 07b) du pâton (01, 01a, 01b) de croissant pouvant être pressées contre une base (03) ou l'une contre l'autre et pouvant être reliées au moins légèrement, et dans lequel
- l'unité (08, 08a, 08b) active reste dans une déflection terminale, dans laquelle les pointes (06, 06a, 06b, 07, 07a, 07b) du pâton (01, 01a, 01b) de croissant sont pressées contre la base (03) ou l'une contre l'autre pendant un certain temps de rétention après avoir atteint cette déflection terminale, et est mise hors prise des pointes (06, 06a, 06b, 07, 07a, 07b) du pâton (01, 01a, 01b) de croissant après la terminaison du temps de rétention,
**caractérisé en ce que**
l'unité (08, 08a, 08b) active a un degré de dureté allant de 0 Shore A à 20 Shore A.

13. Procédé selon la revendication 12,
**caractérisé en ce que**
l'unité (08, 08a, 08b) active est réalisée en tant que piston de pression et les pointes (06, 06a, 06b, 07, 07a, 07b) du pâton (01, 01a, 01b) de croissant sont comprimées entre une base (03) et la surface de piston du piston de pression en entraînant le piston de pression, ledit piston de pression étant déplacé dans la direction (04) de transport de manière synchrone avec la base (03), notamment de manière synchrone avec une bande transporteuse, pendant le contact entre la surface de piston et le pâton (01, 01a, 01b) de croissant.
